(19) **Europäisches Patentamt**

**European Patent Office**

**Office européen des brevets**

(11) **EP 1 669 490 A1**

(12) **EUROPEAN PATENT APPLICATION**
published in accordance with Art. 158(3) EPC

(43) Date of publication:
14.06.2006 Bulletin 2006/24

(51) Int Cl.:
*D06M 11/74* (1990.01)     *D06M 11/79* (1990.01)
*D06M 15/41* (1985.01)     *B32B 27/12* (1968.09)

(21) Application number: 04772295.4

(22) Date of filing: 20.08.2004

(86) International application number:
PCT/JP2004/012339

(87) International publication number:
WO 2005/024119 (17.03.2005 Gazette 2005/11)

(84) Designated Contracting States:
AT BE BG CH CY CZ DE DK EE ES FI FR GB GR
HU IE IT LI LU MC NL PL PT RO SE SI SK TR

(30) Priority: 02.09.2003 JP 2003310590
05.12.2003 JP 2003408019

(71) Applicant: NAGOYA OILCHEMICAL CO., LTD.
Tokai-shi,
Aichi 476-0001 (JP)

(72) Inventors:
• OGAWA, Masanori
c/o Nagoya OilChemical Co., Ltd.
Tokai-shi, Aichi 476-0001 (JP)

• ITO, Kuninori
c/o Nagoya OilChemical Co., Ltd.
Tokai-shi, Aichi 476-0001 (JP)
• HIRANO, Morimichi
c/o Nagoya OilChemical Co., Ltd.
Tokai-shi, Aichi 476-0001 (JP)

(74) Representative: Vossius & Partner
Siebertstrasse 4
81675 München (DE)

(54) **FLAME-RETARDANT SHEET AND FORMED ARTICLE THEREFROM**

(57) The object of the present invention is to provide a highly fire resistant fiber sheet and a molded fiber sheet thereof.

The fibers of the fire resistant sheet of the present invention contain expandable graphite. When said expandable graphite is exposed to high temperatures, it will expand, giving self-extinguishing properties to said fiber sheet. Since said fire resistant molded fiber sheet is highly fire resistant and nontoxic to humans and animals, it is useful for car or building interiors, and the like.

Fig. 1

**Description**

FIELD OF THE INVENTION

The present invention relates to a fire resistant fiber sheet and a molded fiber sheet thereof, used for car or building interiors, and the like.

BACKGROUND OF THE INVENTION

Hitherto, for instance, needled nonwoven fabric, or needled felt, which are made by needle punching intertwining fibers, and resin nonwoven fabric, or resin felt, which is made by binding fibers with synthetic resin, or fiber knitting and fabric, and the like have been provided.
JP 11-61616 JP 8-39596
In said fiber sheet, fire resistance as well as sound proof and insulation properties are necessary.
To give said fiber sheet a fire resistance property, a fire retardant, such as tetrachlorophthalic acid, tetrabromophthalic acid, tetrabromobis phenol A, antimony trioxide, chlorinated paraffin, and the like are contained in said fiber sheet.
Said fire retardants cannot, however, guarantee an adequate fire resistance of said fiber sheet, and are feared to be toxic.

DISCLOSURE OF THE INVENTION

The present invention provides a fire resistant fiber sheet wherein expandable graphite is contained, as a means of solving said problems in the prior art.
Preferably said fibers are hollow, or hollow fibers are contained in said fibers, and preferably fibers having a low melting point of below 180 °C are mixed into said fibers.
It is preferable that said fibers are bound with a synthetic resin binder, which is preferably water soluble, and that a water solution of said synthetic resin binder, in which said expandable graphite is dispersed, is impregnated into said fiber sheet. In this case preferably a water soluble synthetic resin is dissolved in said water solution, and it is preferable that the synthetic resin binder is phenol group resin and that said phenol group resin is sulfomethylated and/or sulfimethylated.
Further, the present invention provides a molded fiber sheet made by molding said fire resistant fiber sheet into a prescribed shape.
Preferably the ventilation resistance of said molded fiber sheet is in the range of between 0.1 and 100kP · as/m.
Furthermore, the present invention provides a laminated sheet wherein other fiber sheet(s) is/are laminated on one or both side(s) of said fire resistant fiber sheet with an intermediating porous thermoplastic resin film.
Still further, the present invention provides a molded laminated sheet made by molding said laminated sheet into a prescribed shape.
Preferably a ventilation resistance of said molded laminated sheet is in the range of between 0.1 and 100kPa · s/m.

[ACTION]

When said fire resistant sheet of the present invention is exposed to a high temperature, said expandable graphite expands, giving a self fire extinguishing property to said fiber sheet. In a case where said fibers are hollow or hollow fibers are contained in said fibers, the rigidity of said fiber sheet is improved. Further, in a case where said fibers, having a low melting point of below 180°C, are contained in said fibers, or where said fibers are bound with a synthetic resin binder, said fiber sheet becomes moldable. Commonly, said synthetic resin binder is water soluble, and a water solution of said synthetic resin binder in which said expandable graphite is dispersed, is impregnated into said fiber sheet, and in a case where said water soluble synthetic resin is dissolved in said water solution, said water solution is thickened to prevent the sedimentation of said expandable graphite, and the adhesiveness of said expandable graphite to fibers is improved. Further, said water soluble synthetic resin also acts as a release agent, so that the resulting molded fiber sheet is easily released from the mold.

[EFFECT OF THE INVENTION]

Said fiber sheet of the present invention has excellent fire resistance and no toxicity to humans and animals.

BRIEF DESCRIPTION OF THE DRAWINGS

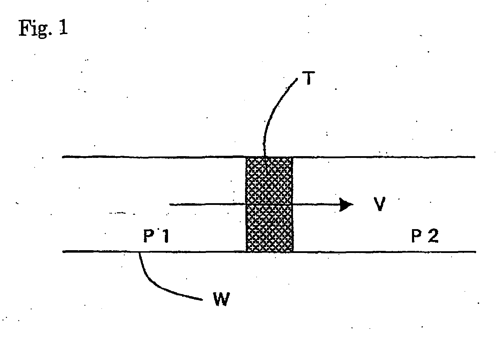

Fig. 1 is a side view to illustrate the principle of the measurement of ventilation resistance.

DETAILED DESCRIPTION OF THE PREFERRED EMBODIMENT

The present invention is detailed as described below.

[Fiber]

The fiber used in the present invention includes synthetic fibers such as polyester fiber, polyamide fiber, acrylic fiber, urethane fiber, polyvinylchloride fiber, polyvinylidene chloride fiber, acetate fiber, and the like, natural fibers such as wool, mohair, cashmere, camel hair, alpaca, vicuna, angora, silk, raw cotton, cattail fiber, pulp, cotton, coconut fiber hemp fiber, bamboo fiber, kenaf fiber, and the like, cellulose group synthetic fibers such as rayon fiber, staple fiber, polynosic fiber, cuprammonium rayon fiver, acetate fiber, triacetate fiber, and the like, inorganic fibers such as glass fiber, carbon fiber, ceramic fiber, asbestos fiber, and the like, and reclaimed fibers obtained by the fiberizing of fiber product made of said fibers. Said fiber is used singly or two or more kinds of said fiber may be used in combination in the present invention. Further, hollow fiber is preferable. Said hollow fiber is made of polyester, such as polyethylent telephthalate, polybutylene telephthalate, polyhexamethylene telephthalate, poly 1.4-dimethylcyclohexane telephthalate, and the like, poliamide such as nylon 6, nylon 66, nylon 46, nylon 10, and the like, polyolefine such as polyethylene, polypropylene, and the like, thermoplastic resin such as an acrylic resin, polyurethane, polyvinylchloride, polyvinylidene chloride, acetate, and the like. Said hollow fiber is used singly or two or more kinds of said fiber may be used in combination.
Said hollow fiber is made by the well known method such as the melt spinning method, and a method wherein two kinds of thermoplastic resins are melt spun together to produce a combined fiber, after which one of said two kinds of thermoplastic resin is selectively removed by dissolving it from said combined fiber.
One or more tuberous hollow part(s) whose cross section(s) is/are circular, elliptical, or the like is (are) formed in said hollow fiber, the ratio of hollow part(s) in said hollow fiber commonly being 5% to 70%, but preferably 10% to 50%. Said ratio of hollow part(s) indicates the rate of the cross section area of tuberous hollow part(s) to the cross section area of said fiber. Further, the fineness of said hollow fiber is in the range of between 1dtex and 50dtex, but preferably between 2dtex and 20dtex.
In a case where said hollow fibers are mixed in with common fibers, said hollow fibers are preferably mixed in with common fibers in an amount of more than 30% by mass.
When said hollow fibers are used in said fiber sheet, the rigidity of said fiber sheet is improved by the tube effect of said hollow fibers.
Further, in the present invention, fiber having a low melting point of below 180°C may be used. Said low melting point fibers include, for example, polyolefine group fibers such as polyethylene fiber, polypropylene fiber ethylene-vinyl acetate copolymer fiber, ethylene-ethyl acrylate copolymer fiber, and the like, polyvinylchloride fiber, polyurethane fiber, polyester fiber, polyester copolymer fiber, polyamide fiber, polyamide copolymer fiber, and the like. Said fiber having a low melting point may be used singly, or two or more kinds of said fiber may be used in combination. The fineness of said low melting point fiber is commonly in the range of between 0.1dtex and 60dtex. Commonly, said low melting point fibers are mixed in with common fibers in an amount of 1 to 50% by mass.

[Expandable graphite]

Said expandable graphite used in the present invention is made by dipping natural graphite into a mixture of mineral acids, such as sulfuric acid, nitric acid, and the like, and then adding an oxidizing reagent, such as hydrogen peroxide, hydrochloric acid, with an expansion start temperature of about 150°C to 300°C, and an expansion volume of about 30 to 300ml/g, with a particle size of about 30 to 300mesh.
Said expandable graphite may be added to said fiber sheet by dispersing said expandable graphite in a synthetic resin binder in a case where said synthetic resin binder is emulsion or latex type, impregnating said fiber sheet with said resin binder, or said resin binder is impregnated into said fiber sheet, after which a water solution of a water soluble synthetic resin or an emulsion of an alkali soluble synthetic resin, in which expandable graphite is dispersed, is prepared to coat or impregnate into said fiber sheet, said water soluble synthetic resin being such as polysodium acrylate, partially saponified product of polyacrylic ester, polyvinylalcohol, carboxymethyl cellulose, methyl cellulose, ethyl cellulose, hydroxyethyl cellulose, and the like, said alkali soluble synthetic resin being such as copolymer of acrylic ester and/or methacrylic ester, and acrylic acid and/or methacrylic acid, said copolymer being slightly cross-linked.

Said expandable graphite is preferably dispersed in said synthetic resin binder, synthetic resin emulsion, or synthetic resin water solution with a homogenizer, ultrasonic emulsifying apparatus, or the like.

In a case where said ultrasonic emulsifying apparatus is used, said expandable graphite is very finely and uniformly dispersed in said water solution or said emulsion, and in a case where said synthetic resin binder in which said expandable graphite is uniformly dispersed, is impregnated into said fiber sheet, said expandable graphite may easily penetrate deeply said fiber sheet, improving the fire resistance of said fiber sheet.

[Thermally expandable particles]

In the present invention, thermally expandable particles may be added to said fiber sheet if desired. Said thermally expandable particles consist of a thermoplastic resin having a low softening point, and a solvent having a low boiling point. Said thermoplastic resin having a low softening point may include, a (co)polymer of one or more kinds of monomer, for example, aliphatic or cyclic acrylate such as methyl acrylate, ethyl acrylate, n-propyl acrylate, iso-propyl acrylate, n-buthyl acrylate, iso-buthyl acrylate, t-buthyl acrylate, 2-ethyl-hexyl acrylate, cyclohexyl acrylate, tetrahydrofurfuryl acrylate, methyl methacrylate, ethyl methacrylate, n-propyl methacrylate, iso-propyl methacrylate, n-buthyl methacrylate, iso-buthyl methacrylate, 2-ethyl hexyl methacrylate, cyclohexyl methacrylate, tetrahydrofurfuryl methacrylate, stearyl methacrylate, lauryl methacrylate, and the like; and/or methacrylate ; vinyl ether such as methyl vinyl ether, ethyl vinyl ether, n-propyl vinyl ether, n-buthyl vinyl ether, iso-buthyl vinyl ether, and the like ; a styrenic monomer such as styrene, $\alpha$-methyl styrene, and the like ; a nitrile group monomer such as acrylonitrile, methacrylonitrile, and the like; a halogen aliphatic acid vinyl monomer such as vinyl acetate, propionic acid vinyl, and the like ; a halogen containing vinyl monomer such as vinyl chloride, vinylidene chloride, vinyl fluoride, vinylidene fluoride, and the like ; an olefin group monomer such as ethylene; propylene, and the like ; a diene group monomer such as isoprene, chloroprene, butadiene, and the like ; $\alpha,\beta$-unsaturated carboxylic acid such as acrylic acid, methacrylic acid, itaconic acid, maleic acid, crotonic acid, atropic acid, citraconic acid, and the like ; a hydroxyl group cotaining monomer such as 2-hydroxy ethyl methacrylate, 2-hydroxy ethyl acrylate, 2-hydroxy propyl methacrylate, 2-hydroxy propyl acrylate, allyl alcohol, and the like ; an amide group vinyl monomer such as acrylic amide, methacrylamide, diaceton acrylic amide, and the like an amino group containing vinyl monomer such as dimethylamino ethyl methacrylate, dimethylamino ethyl acrylate, dimethylamino propyl methacrylate, dimethylamino propyl acrylate, and the like ; an epoxy group containing vinyl monomer such as glycidyl acrylate, glycidyl methacrylate, glycidyl allyl ether, and the like ; further, water soluble vinyl monomer such as vinyl pyrrolidone, vinyl pyridine, vinyl carbazole and the like ; a hydrolyzable silyl group containing vinyl monomer such as Y-methacryloxy propyl tri methoxysilane, vinyl tri acetoxysilane, p-tri methoxy cyril styrene, p-tri ethoxy cyril styrene, p-tri methoxy cyril-$\alpha$-methyl styrene, p-tri ethoxy cyril-$\alpha$-methyl styrene, $\gamma$-acryloxy propyl tri methoxysilane, vinyl tri methoxysilane, N-$\beta$(N-vinyl benzyl amino ethyl-$\gamma$-amino propyl) tri methoxysilane, hydrochloride, and the like ; and crosslinked (co)polymer of said (co)polymer crosslinked with a cross-linking agent such as divinyl benzene, polyvalent acrylate such as diethyleneglycol diacrylate and the like ; metacrylate, diathylphthelate, allyl glycidyl ether, and the like ; thermoplastic resin having softening point desirably below 180°C, such as a low softening point polyamid, low softening point polyester, and the like.

Said low boiling point solvent may include organic solvents having a boiling point below 150°C, such as n-hexane, cyclohexane, n-pentane, iso-pentane, n-butane, iso-butane, n-heptane, n-octane, iso-octane, gasoline, ethyether, acetone, benzene, and the like.

Said thermally expandable particles are made of expandable beads, wherein said low boiling point solvent is impregnated into said thermoplastic resin beads, microcapsules, wherein said low boiling point solvent is sealed in a shell of said thermoplastic resin, having a low softening point, and the like. Commonly, said particles have a diameter in the range of between 0.5 and 1000/$\mu$m.

Further, thermoexpandable inorganic particles such as vermiculite perlite, shirasu balloon, and the like may be used as said thermally expandable particles of the present invention.

[Fiber sheet]

Said fiber sheet of the present invention may be manufactured by a method in which sheet or mat of fiber web is intertwined by the needle punching, a method in which sheet or mat of fiber web is bound by mixing low melting point fibers into said sheet or mat or impregnating a synthetic resin binder into said sheet or mat, or a method in which sheet or mat of fiber web is intertwined by the needle punching, after which said synthetic resin binder is impregnated into said needle punched sheet or mat, or a method in which fibers are knitted or woven, or the like.

Said expandable graphite or thermally expandable particles may be mixed into said fibers before sheet or mat is made from said fibers, or in a case where said synthetic resin binder is impregnated or mixed into said sheet or mat, said expandable graphite or said thermally expandable particles may be mixed into said synthetic resin binder. The mixing ratio of said expandable graphite or thermally expandable particles may be arbitrary, but usually, said expandable graphite is added to said fibers in an amount in the range of between 0.5 and 50% by mass, and in a case where said thermally expandable particles are used together with said expandable graphite, said particles may be added to said fibers in an amount in the range of between 0.1 to 50% by mass.

After said synthetic resin solution is impregnated or mixed into said fiber sheet, said fiber sheet may be dried. In a case where said synthetic resin binder contained in said fiber sheet is a thermosetting resin, when said thermosetting resin is put in B-stage, said fiber sheet can be stored for a long time and moreover, said fiber sheet can be molded at a low temperature in a short time.

[Synthetic resin binder]

Synthetic resin used as a binder for said fibers includes, for example, thermoplastic synthetic resin such as polyethylene, polypropylene, ethylene-propylene copolymer, ethylene-vinyl acetate copolymer, polyvinylchloride, polyvinylidenechloride, polystyrene, polyvinylacetate, fluoric resin, acrylic acid resin, thermoplastic polyester, thermoplastic polyamide, thermoplastic urethane resin, acrylonitrile-butadiene copolymer, styrene-butadiene copolymer, acrylonitrile-butadiene-styrene copolymer, ethylene-propylene copolymer, ethylene-propylene terpolymer, ethylene vinyl acetate copolymer, and the like; thermosetting resins such as urethane resin, melamine resin, heat hardening type acrylic acid resin, urea resins, phenolic resin, epoxy resin, heat hardening type polyester, and the like, and further, a synthetic resin precursor which produces said synthetic resin such as prepolymer, oligomer monomer, and the like may be used. Said prepolymer, ologomer or monomer may include urethane resin prepolymer, epoxy resin prepolymer, melamine resin prepolymer, urea resin prepolymer, phenol resin prepolymer, diallyl phthalate prepolymer, acrylic oligomer, polyisocyanate, methacryl ester monomer, diallyphthalated monomer, and the like.

Said synthetic resin binder may be used singly or two or more kinds of said synthetic resin may be used together, and said synthetic resin binder may be commonly provided as an emulsion, latex, water solution, organic solvent solution, and the like.

In a case where said synthetic resin binder is water solution, water soluble resin is preferably dissolved in said water solution. Said water soluble resin may include such as polysodium acrylate, partial saponified polyacrylate, polyvinylalcohol, carboxy methyl cellulose, methyl cellulose, ethyl cellulose, hydroxyl ethyl cellulose, and the like. Further, an alkali soluble resin such as copolymer of acrylic acid ester and/or methacrylic acid ester and acrylic acid and/or methacrylic acid or a slightly cross-linked copolymer of the above mentioned copolymer, and the like may be used as said water soluble resin of the present invention. Said copolymer or said slightly cross-linked copolymer is commonly provided as an emulsion.

In a case where said water soluble resin is dissolved in said synthetic resin water solution, said water solution may be thickened to improve the stability of dispersion so that said expandable graphite may become difficult to sediment, and uniform dispersion can be prepared.

Further, the adhesiveness of said expandable graphite to said fibers may be improved by said water soluble resin, to prevent the release of said expandable graphite from said fiber sheet.

Said water soluble resin may be commonly added to said water solution in an amount in the range of between 0.1 and 20% by mass as a solid.

To impregnate said synthetic resin into said fiber sheet, said fiber sheet is usually dipped into liquid synthetic resin or synthetic resin solution, or said liquid synthetic resin or said synthetic resin solution is coated on said fiber sheet by spraying, or by using a knife coater, roll coater, flow coater, or the like.

To adjust the synthetic resin content in said fiber sheet into which said synthetic resin is impregnated or mixed, said sheet may be squeezed using a squeezing roll or press machine after said synthetic resin has been impregnated or mixed into said fiber sheet. As a result of said squeezing process, the thickness of said fiber sheet may be reduced but in a case where said hollow fibers are contained in said fiber sheet, said fiber sheet has high rigidity, so that the thickness of said fiber sheet may be restored elastically after squeezing, to ensure adequate thickness of said fiber sheet. In particular, in a case where said low melting point fibers are contained in said fiber sheet, it is desirable to heat said fiber sheet and melt said low melting point fibers, so as to bind the fibers with said melted fibers. Thus, the rigidity and strength of said fiber sheet is improved, so that the workability of said fiber sheet during the process of impregnating it with said synthetic resin may be improved, resulting in a remarkable restoration of the thickness of said fiber sheet after squeezing.

As described above, in a case where said hollow fibers are contained in said fiber sheet, said fiber sheet may be rigid, so that the content of said synthetic resin binder in said fiber sheet can be reduced, compared with said fiber sheet containing no-hollow fibers.

In a case where said synthetic binder is an aqueous synthetic resin emulsion, it is desirable to disperse said expandable graphite into said aqueous synthetic resin emulsion using an ultra sonic effect. In this case, said ultrasonic wave's length is desirably in the range of between 10 and 700kH$_2$. When said ultrasonic wave is effected on said aqueous synthetic resin emulsion, said expandable graphite may become very fine, and said very fine graphite can be impregnated into the inside of said fiber sheet.

A desirable synthetic resin binder used in the present invention is phenol group resin. Said phenol group resin used in the present invention is described below.

A phenol group resin is produced by the condensation reaction between phenolic compound and an aldehyde and/or aldehyde donor. Said phenol group resin may be sulfoalkylated and /or sulfialkylated to improve its water solubility.

Said phenol group resin is impregnated into a green fiber sheet in the form of a precondensation polymer. Commonly, said precondensation polymer is prepared as a water solution, but if desired, a water-soluble organic solvent can also be used in the present invention. Said water-soluble organic solvent may be an alcohol such as methanol, ethanol, isopropanol, n-propanol, n-butanol, isobutanol, sec-butanol, t-butanol, n-amyl alcohol, isoamyl alcohol, n-hexanol, methylamyl alcohol, 2-ethyl butanol, n-heptanol, n-octanol, trimethylnonylalcohol, cyclohexanol, benzyl alcohol, furfuryl alcohol, tetrahydro furfuryl alcohol, abiethyl alcohol, diacetone alcohol, and the like; ketones such as acetone, methyl acetone, methyl ethyl ketone, methyl-n-propyl ketone, methyl-n-butyl ketone, methyl isobutyl ketone, diethyl ketone, di-n-propyl ketone, diisobutyl ketone, acetonyl acetone, methyl oxido, cyclohexanone, methyl cyclohexanone, acetophenon, camphor, and the like; glycols such as ethylene glycol, diethylene glycol, triethylene glycol, propylene glycol, trimethylene glycol, polyethylene glycol, and the like; glycol ethers such as ethylene glycol mono-methyl ether, ethylene glycol mono-ethyl ether, ethylene glycol isopropyl ether, diethylene glycol mono-methyl ether, triethylene glycol mono-methyl ether, and the like; esters of the above mentioned glycols such as ethylene glycol diacetate, diethylene glycol mono-ethyl ether acetate, and the like, and their derivatives; ether such as 1,4-dioxane, and the like; diethyl cellosolve, diethyl carbitol, ethyl lactate, isopropyl lactate, diglycol diacetate, dimethyl formamide, and the like.

(Phenol group compound)

The phenolic compound used to produce said phenolic resin may be monohydric phenol, or polyhydric phenol, or a mixture of monohydric phenol and polyhydric phenol, but in a case where only monohydric phenol is used, formaldehyde is apt to be emitted when or after said resin composition is cured, so that polyphenol or a mixture of monophenol and polyphenol is desirably used.

(Monohydric phenol)

The monohydric phenols include alkyl phenols such as o-cresol, m-cresol, p-cresol, ethylphenol, isopropylphenol, xylenol, 3,5-xylenol, butylphenol, t-butylphenol, nonylphenol and the like; monohydric derivatives such as o-fluorophenol, m-fluorophenol, p- fluorophenol, o-chlorophenol, m-chlorophenol, p-chlorophenol, o-bromophenol, m-bromophenol, p-bromophenol, o-iodophenol, m-iodophenol, p-iodophenol, o-aminophenol, m-aminophenol, p-aminophenol, o-nitrophenol, m-nitrophenol, p-nitorophenol, 2,4-dinitorophenol, 2,4,6-trinitorophenol and the like; monohydric phenols of polycyclic aromatic compounds such as naphthol and the like. Each monohydric phenol can be used singly, or as a mixture thereof.

(Polyhydric phenol)

The polyhydric phenols mentioned above, include resorsin, alkylresorsin, pyrogallol, catechol, alkyl catechol, hydroquinone, alkyl hydroquinone, fluoroglrsin, bisphenol, dihydroxynaphthalene and the like. Each polyhydric phenol can be used singly, or as a mixture thereof. Resorsin and alkylresorsin are more suitable than other polyhydric phenols. Alkylresorsin is in particular the most suitable polyhydric phenols because alkylresorsin can react with aldehydes more rapidly than resorsin.

The alkylresorsins include 5-methyl resorsin, 5-ethyl resorsin, 5-propyl resorsin, 5-n-butyl resorsin, 4,5-dimethyl resorsin, 2,5-dimethyl resorsin, 4,5-diethyl resorsin, 2,5-diethyl resorsin, 4,5-dipropyl resorsin, 2,5-clipropyl resorsin, 4-methyl-5-ethyl resorsin, 2-methyl-5-ethyl resorsin, 2-methyl-5-propyl resorsin, 2,4,5-trimethyl resorsin, 2,4,5-triethyl resorsin, and the like.

A polyhydric phenol mixture produced by the dry distillation of oil shale, which is produced in Estonia, is inexpensive and said polyhydric phenol mixture includes 5-metylresorcin, along with many other kinds of alkylresorcin, being highly reactive, making said polyhydric phenol mixture an especially desirable raw polyphenol material.

In the present invention, said phenolic compound and aldehyde and/or aldehyde donor (aldehydes) are condensed together. Said aldehyde donor refers to a compound or a mixture which emits aldehyde when said compound or said mixture decomposes. The aldehydes include formaldehyde, acetoaldehyde, propionaldehyde, chloral, furfural, glyoxal, n-butylaldehyde, caproaldehyde, allylaldehyde, benzaldehyde, crotonaldehyde, acrolein, phenyl acetoaldehyde, o-tolualdehyde, salicylaldehyde and the like. The aldehyde donors include paraformaldehyde, tiroxane, hexamethylenetetramine, tetraoxymethylene, and the like.

As described above, said phenolic resin is desirably sulfoalkylated and/or sulfialkylated, to improve the stability of said water soluble phenolic resin.

(Sulfomethylation agent)

The sulfomethylation agents used to improve the stability of the aqueous solution of phenol resins, include such as water soluble sulfites prepared by the reaction between sulfurous acid, bisulfurous acid, or metabisulfirous acid, and alkaline metals, trimethyl amine, quaternary ammonium (e.g. benzyltrimethylammonium); and aldehyde additions prepared by the reaction between said water soluble sulfites and aldehydes.

The aldehyde additions are prepared by the addition reaction between aldehydes and water soluble sulfites as mentioned above, wherein the aldehydes include formaldehyde, acetoaldehyde, propionaldehyde, chloral, furfural, glyoxal, n-butylaldehyde, caproaldehyde, allylaldehyde, benzaldehyde, crotonaldehyde, acrolein, phenyl acetoaldehyde, o-tolualdehyde, salicylaldehyde, and the like. For example, hydroxymethane sulfonate, which is one of the aldehyde additions, is prepared by the addition reaction between formaldehyde and sulfite.

(Sulfimethylation agent)

The sulfimethylation agents used to improve the stability of the aqueous solution of phenol resins, include alkaline metal sulfoxylates of aliphatic or aromatic aldehyde such as sodium formaldehyde sulfoxylate (a.k.a. Rongalit), sodium benzaldehyde sulfoxylate, and the like; hydrosulfites (a.k.a. dithionites) of alkaline metal or alkaline earth metal such as sodium hydrosulfite, magnesium hydrosulfite and the like; hydroxyalkanesulfinate such as hydroxymethanesulfinate and the like.

In the case of producing said phenol resins, if necessary, additives may be mixed in with said phenol resins as a catalyst or to adjust the pH. Such additives include acidic compounds and alkaline compounds. Said acidic compounds include inorganic acid or organic acid such as hydrochloric acid, sulfuric acid, orthophosphoric acid, boric acid, oxalic acid, formic acid, acetic acid, butyric acid, benzenesulfonic acid, phenolsulfonic acid, p-toluenesulfonic acid, naphthalene-$\alpha$-sulfonic acid, naphthalene-$\beta$-sulfonic acid, and the like; esters of organic acid such as dimethyl oxalate, and the like; acid anhydrides such as maleic anhydride, phthalic anhydride, and the like; salts of ammonium such as ammonium chloride, ammonium sulfate, ammonium nitrate, ammonium oxalate, ammonium acetate, ammonium phosphate, ammonium thiocyanate, ammonium imidosulfonate, and the like; halogenated organic compounds such as monochloroacetic acid, the salt thereof, organic halogenides such as $\alpha,\alpha$'-dichlorohydrin, and the like; hydrochloride of amines such as triethanolamine hydrochloride, aniline hydrochloride, and the like; urea adducts such as the urea adduct of salicylic acid, urea adduct of stearic acid; urea adduct of heptanoic acid, and the like; and N-trimethyl taurine, zinc chloride, ferric chloride, and the like.

Alkaline compounds include ammonia, amines; hydroxides of alkaline metal and alkaline earth metal such as sodium hydroxide, potassium hydroxide, barium hydroxide, calcium hydroxide, and the like; oxide of alkaline earth metal such as lime, and the like; salts of alkaline metal such as sodium carbonate, sodium sulfite, sodium acetate, sodium phosphate, and the like.

(Method of producing the phenol resins)

The phenol resins (the precondensation polymers) can be prepared using the usual method. The usual methods include method (a) comprising the condensation of a monohydric phenol and/or a polyhydric phenol and aldehydes; method (b) comprising the condensation of a precondensation polymer and a monohydric phenol and/or a polyhyrdric phenol, wherein said precondensation polymer comprises a monohydric phenol and aldehydes; method (c) comprising the condensation of a precondensation polymer and a monohydric phenol and/or a polyhydric phenol, wherein said precondensation polymer comprises a monohydric phenol, a polyhydric phenol and aldehydes; method (d) comprising the condensation of a precondensation polymer consisting of a monohydric phenol and aldehydes, and said precondensation polymer consisting of a polyhydric phenol and aldehydes; and method (e) comprising the condensation of a precondensation polymer consisting of a monohydric phenol and aldehydes and/or precondensation polymers consisting of a polyhydric phenol resin and aldehydes, and said precondensation polymer consisting of monohydric phenol and polyhydric phenol and aldehydes.

In the present invention, the desirable phenolic resin is phenol-alkylresorcin cocondensation polymer. Said phenol-alkylresorcin cocondensation polymer provides a water solution of said cocondensation polymer (pre-cocondensation polymer) having good stability, and being advantageous in that it can be stored for a longer time at room temperature, compared with a condensate consisting of a phenol only (precondensation polymer). Further, in a case where said sheet material is impregnated with said water solution by precuring, said material has good stability and does not lose its moldability after longtime storage. Further, since alkylresorcin is highly reactive to aldehyde, and catches free aldehyde to react with it, the content of free aldehyde in the resin can be reduced.

Said phenol-alkylresorcin cocondensation polymer is also advantageous in that the content of free aldehyde in said polymer is reduced by the reaction with alkylresorcin.

The desirable method for producing said phenol-alkylresorcin cocondensation polymer is first to create a reaction between phenol and aldehyde to produce a phenolic precondensation polymer, and then to add alkylresorcin, and if desired, aldehyde, to said phenolic precondensation polymer to create reaction.

In the case of method (a), for the condensation of monohydric phenol and/or polyhydric phenol and aldehydes, the aldehydes (0.2 mole to 3 moles) are added to said monohydric phenol (1mole), then said aldehydes (0.1 mole to 0.8 mole) are added to the polyhydric phenol (1mole) as usual. If necessary, additives may be added to the phenol resins (the precondensation polymers). In said method(s), there is a condensation reaction from heating at 55°C to 100°C for 8 to 20 hours. The addition of aldehydes may be made at one time at the beginning of the reaction, or several separate times throughout the reaction, or said aldehydes may be dropped in continuously throughout the reaction.

In the case of sulfomethylation and/or sulfimethylation, the sulfomethylation agents and/or sulfimethylation agents may be added to the precondensation at an arbitrary time.

The addition of the sulfomethylation agents and/or sulfimethylation agents may be made any time, such as before, during, or after condensation.

The total amount of said sulfomethylation agent and/or sulfimethylation agent added is usually in the range of between 0.001 and 1.5 moles per 1mole of phenol. In a case where said amount added is less than 0.001 mole, the hydrophile of the resulting sulfomethylated and/or sulfimethylated phenolic resin is not adequate, and in a case where said amount added is more than 1.5 moles, the water resistance of the resulting sulfomethylated and/or sulfimethylated phenolic resin degrades. To provide excellent curing properties in the resulting precondensate and excellent physical properties in the cured resin, said amount to be added is preferably in the range of between 0.01 and 0.8 mole per 1 mole of phenol.

The sulfomethylation agents and/or sulfimethylation agents for sulfomethylation and/or sulfimethylation react with the methylol groups and/or aromatic groupes, so that the sulfomethyl group and/or sulfimethyl group are introduced to the precondensation prepolymers.

The solution of precondensation polymers of sulfomethylated and/or sulfimethylated phenol resins is stable even in a wide range of acidic condition (e.g. pH=1.0) or alkaline condition, so that the solution can be cured in any conditions such as acid, neutral or alkaline. In the case of curing the precondensate under acidic condition, there is a decrease in the remaining methylol groups, so that no formaldehydes from the decomposed cured phenol resins appear.

Further, if necessary, the phenol resins and/or precondensation polymers thereof may be copolycondensed with amino resin monomers such as urea, thiourea, melamine, thiomelamine, dicyandiamine, guanidine, guanamine, acetoguanamine, benzoguanamine, 2,6-diamino-1.3-diamine, and the like.

Further, curing agents such as an aldehyde and/or an aldehyde donor or an alkylol triazone derivative, and the like, may be added to said phenolic precondensation polymer (including precocondensation polymer).

As said aldehyde and/or aldehyde donor, the same aldehyde and/or aldehyde donor as used in the production of said phenolic precondensation polymer is (are) used, and an alkylol triazone derivative is produced by the reaction between urea group compound, amine group compound, and aldehyde and/or aldehyde donor. Said urea group compound used in the production of said alkylol triazoned derivative may be such as urea, thiourea, an alkylurea such as methylurea, an alkylthiourea such as methylthiourea; phenylurea, naphthylurea, halogenated phenylurea, nitrated alkylurea, and the like, or a mixture of two or more kinds of said urea group compounds. In particular, desirable urea group compound may be urea or thiourea. As amine group compounds, aliphatic amine such as methyl amine, ethylamine, propylamine, isopropylamine, butylamine, amylamine and the like, benzylamine, farfuryl amine, ethanol amine, ethylmediamine, hexamethylene diamine hexamethylene tetramine, and the like, as well as ammonia are illustrated, and said amine group compound is used singly or two or more amine group compounds may be used together.

The aldehyde and/or aldehyde donor used for the production of said alkylol triazone derivative is (are) the same as the aldehyde and/or aldehyde donor used for the production of said phenolic precondensation polymer.

To synthesize said alkylol triazone derivatives, commonly 0.1 to 1.2 moles of said amine group compound(s) and/or ammonia, and 1.5 to 4.0 moles of aldehyde and/or aldehyde donor are reacted with 1 mole of said urea group compound.

In said reaction, the order in which said compounds are added is arbitrary, but preferably, first the required amount of aldehyde and/or aldehyde donor is (are) put in a reactor, then the required amount of amine group compound (s) and/or ammonia is (are) gradually added to said aldehyde and/or aldehyde donor, the temperature being kept at below 60°C, after which the required amount of said urea group compound(s) is (are) added to the resulting mixture at 80 to 90°C, for 2 to 3 hours, being agitated to react together. Usually, 37% by mass of formalin is used as said aldehyde and/or aldehyde donor, but some of said formalin may be replaced with paraform aldehyde to increase the concentration of the reaction product.

Further, in a case where hexamethylene tetramine is used, the solid content of the reaction product obtained is much higher. The reaction between said urea group compound, said amine group compound and/or ammonia and said aldehyde and/or aldehyde donor is commonly performed in a water solution, but said water may be partially or wholly replaced by one or more kinds of alcohol(s) such as methanol, ethanol, isopropanol, n-butanol, ethylene glycol, diethlene glycol, and the like, and one or more kinds of other water soluble solvent(s) such as a ketone group solvent like acetone, methylethyl ketone, and the like can also be used as solvents.

The amount of said curing agent to be added is, in the case of an aldehyde and/or aldehyde donor, in the range of between 10 and 100 parts by mass to 100 parts by mass of said phenolic precondensation polymer (precocondensation polymer), and in the case of alkylol triazone, 10 to 500 parts by mass to 100 parts by mass of said phenolic precondensation polymer (precocondensation polymer).

Into said synthetic resin binder used in the present invention, further, inorganic fillers such as calcium carbonate, magnesium carbonate, barium sulphate, calcium sulphate, sulfurous acid calcium, calcium phosphate, calcium hydroxide, magnesium hydroxide, aluminium hydroxide, magnesium oxide, titanium oxide, iron oxide, zinc oxide, alumina, silica, diatomaceous earth, dolomite, gypsum, talc, clay, asbestos, mica, calcium silicate, bentonite, white carbon, carbon black, iron powder, aluminum powder, glass powder, stone powder, blast furnace slag, fly ash, cement, zirconia powder, and the like ; natural rubber or its derivative ; synthetic rubber such as styrene-butadiene rubber, acrylonitrile-butadiene rubber, chloroprene rubber, ethylene-propylene rubber, isoprene rubber, isoprene-isobutylene rubber, and the like ; water-soluble macromolecule and natural gum such as polyvinyl alcohol, sodium alginate, starch, starch derivative, glue, gelatin, powdered blood, methyl cellulose, carboxymethylcellulose, hydroxy ethyl cellulose, polyacrylate, polyacrylamide, and the like; fillers such as calcium carbonate, talc, gypsum, carbon black, wood flour, walnut powder, coconut shell ffour, wheat flour, rice flour, and the like ; surfactants ; higher fatty acid such as stearic acid, palmitic acid, and the like ; fatty alcohol such as palmityl alcohol, stearyl alcohol, and the like fatty acid ester such as butyryl stearate, glycerin mono stearate and the like ; fatty acid amide ; natural wax or composition wax such as carnauba wax, and the like ; mold release agents such as paraffin, paraffin oil, silicone oil, silicone resin, fluoric resin, polyvinyl alcohol, grease, and the like ; organic blowing agents such as azodicarbonamido, dinitroso pentamethylene tetramine, P,P'-oxibis(benzene sulfonylhydrazide), azobis-2,2'-(2-methylglopionitrile), and the like ; inorganic blowing agents such as sodium bicarbonate, potassium bicarbonate, ammonium bicarbonate and the like ; hollow particles such as shirasu balloon, perlite, glass balloon, foaming glass, hollow ceramics, and the like ; foaming bodies or particles such as foaming polyethylene, foaming polystyrene, foaming polypropylene, and the like ; pigment; dye ; antioxidant; antistatic agent; crystallizer ; fire retardants such as a phosphorus compound, nitrogen compound, sulfur compound, boron compound, bromine compound, guanidine compound, phosphate compound, phosphate ester compound, amino resin, and the like ; flameproof agent ; water-repellent agent ; oil-repellent agent ; insecticide agent; preservative; wax ; lubricants ; antioxidants, ultraviolet stabilizers; plasticizers such as phthalic ester (ex. dibutyl phthalate(DBP), dioctyl phthalate(DOP), dicyclohexyl phthalate) and others (ex. tricresyl phosphate), can be added or mixed.

Said fiber sheet of the present invention is molded in a flat panel shape or other prescribed shape, and commonly hot-press molding is applied for said molding, and in a case where thermally expandable particles are contained in said fiber sheet, said thermally expandable particles may expand with restricting the thickness of said fiber sheet during hot-press molding In a case where said thermally expandable particles are heated at a temperature higher than the expansion temperature of said thermally expandable particles, restricting the thickness of said fiber sheet, said thermally expandable particles may expand. Since the thickness of said fiber sheet is restricted as described above, expanding particles may push the fibers surrounding said expanding particles, compressing said fibers, resulting in the density of said fiber sheet becoming higher, improving the rigidity of said fiber sheet. The air space ratio of whole fiber sheet, however, may not change, so that the weight of said fiber sheet may also remain the same.

Said fiber sheet of the present invention may be hot-pressed into a prescribed shape after said fiber sheet is hot-pressed into a flat panel, and further, in a case where fibers having a low melting point, or a thermoplastic resin binder is contained in said fiber sheet, said fiber sheet may be heated to soften said low melting point fibers or said thermoplastic resin, after which said fiber sheet may be cold-pressed into a prescribed shape. A plural number of said sheets are laminated upon molding.

Said sheet of the present invention is useful as a base panel for the interior of a car, such as a head lining, dash silencer, hood silencer, engine under cover silencer, cylinder head cover silencer, dashouter silencer, floor mat, dash board, door trim or reinforcement that is laminated on said base panel or sound insulating material, heat insulating material, or building material.

The ventilation resistance of said molded sheet made of said fiber sheet is preferably 0.1 to 100 kPa · s/m, wherein said ventilation resistance R (Pa · s/m) is a barometer expressing the degree of ventilation of said porous material. To measure said ventilation resistance R, a stationary current pressure difference method may be applied. As shown in Fig. 1, a test piece is arranged in a cylindrical duct W, air being put in said duct at a constant flow, as shown by an arrow, to measure the difference of the pressure in said duct between inlet side P1, and outlet side P2.

Ventilation resistance is calculated by the following formula.

$$R = \triangle P / V$$

Wherein ΔP is the difference in the pressure Pa(ΔP= P1 - P2), and V represents the flowing volume of the air for said unit cross section area of said duct ($m^3/m^2 \cdot s$). Said ventilation resistance R (Pa · s/m) has the following relationship with the ventilation degree C(m/Pa · s) of

$$C = 1/R$$

Said ventilation resistance can be measured with such as the ventilation tester (Tester Name: KES - F8 - AP1, KATO TEC Co., Ltd. The stationary current pressure difference method).

Said molded fiber sheet having a ventilation resistance in the range of between 0.1 and 100kPa · s/m has an excellent sound absorption property.

Said fiber sheet may be laminated on to other sheet material such as the surface sheet, back sheet, core sheet and the like and further, other sheet(s) may be laminated on to one or both side(s) of said fiber sheet of the present invention, intermediating a porous thermoplastic resin film.

Said porous plastic sheet may be a film made of, for example, polyolefine group resin such as polyethylene, polypropylene, ethylene-vinyl acetate copolymer, ethylene-ethylacrylate copolymer and the like (including modified polyolefine group resin), polyvinylchloride, polyurethane, polyester, polyester copolymer, polyamide, polyamide copolymer, and the like, or a mixture of two or more kinds of said resins.

Said laminated sheet is manufactured by such as extrusion molding a thermoplastic resin film using a T-die, and laminating said thermoplastic resin film on a fire resistant fiber sheet, further laminating other fiber sheet on said fiber sheet, then hot-pressing said laminated sheet into a prescribed shape.

Said thermoplastic resin film may be porous, or may be needled after laminating with said fire resistant fiber sheet to be a porous thermoplastic resin film, but when said thermoplastic resin film which has been extruded from the T-die, and softened by heating, is laminated on said fiber sheet, and pressed, said thermoplastic resin film may become porous, having a lot of fine holes. Said holes in said thermoplastic resin film may be formed by the shag on the surface of said fiber sheet. In this method, no process is necessary to form holes in said film, and fine holes may give the product an improved sound absorption property.

The ventilation resistance of said molded laminated sheet manufactured by the molding of said laminated sheet is preferably in the range of between 0.1 and 100 kPa · s/m. Said molded laminated sheet has an excellent sound absorption property.

EXAMPLES of the present invention are described below. However, the scope of the present invention should not be limited by only said EXAMPLES.

[EXAMPLE 1]

A fiber sheet (unit weight : 500g/m², thickness : 15mm) was manufactured by the needle punching method, using a fiber web containing 80% by mass of polyester fiber (fiber fineness : 12dtex fiver length : 52mm) and 20% by mass of low-melting point polyester fiber (softening point : 110°C, fiber fineness : 8dtex, fiber length : 54mm). A treatment solution was prepared by adding and mixing 20 parts by mass of expandable graphite (expansion start temperature 300 to 320°C, expansion rate : 100 times) to 80 parts by mass of phenol-formaldehyde precondensation polymer (solid content 50% by mass). The viscosity of said treatment solution was 100mPa · s.

Said treatment solution was impregnated into said fiber sheet in an amount of 50% by mass solid content, after which said fiber sheet into which said treatment solution was impregnated, was then dried in a drying chamber with decompression, at 100 to 120°C for 3 minutes, to precure said fiber sheet. Said precured fiber sheet was then hot-pressed at 200°C for 60 seconds, to obtain a molded fiber sheet having a thickness of 10mm. The ventilation resistance of the resulting molded fiber sheet was measured using a ventilation tester (Tester Name: KES-F8-AP1, KATO TECH Co., Ltd. V= $4 \times 10^{-2}$ (m/s). As a result, the ventilation resistance of said molded fiber sheet was 3.5kPa · s/m.

[EXAMPLE 2]

A treatment solution was prepared by adding and mixing 20parts by mass of polyvinylalcohol water solution (10% by mass of solid content, saponification degree 98.5 mol%) and 20parts by mass of expandable graphite (expansion start temperature : 300 to 320°C, expansion rate, 100 times) into 60 parts by mass of phenol folmaldehyde precondensation polymer (50% by weight solid content). The viscosity of said treatment solution was 250mPa · s. Using said treatment solution, a molded fiber sheet having a thickness of 10mm was manufactured in the same manner as EXAMPLE 1. The ventilation resistance of the resulting molded fiber sheet was measured using the same tester as used in EXAMPLE 1 was 4.1 kPa · s/m.

[EXAMPLE 3]

A treatment solution was prepared by adding and mixing 15 parts by mass of polyvinyl alcohol water solution (10% by mass solid content, saponification degree 98.5mol%), 4parts by mass of PRIMAL, ASE-60 (Rohm and Haas Co., Trade Name) which is an emulsion of slightly cross-linked ethyl acrylate-methacrylic acid copolymer as an alkali soluble thickener, 20 parts by mass of expandable graphite (expansion start temperature: 300 to 320°C, expansion rate : 130 times), and 1 part by mass of ammonia water (27% by mass) into 60 parts by mass of phenol-folmaldehyde precondensation polymer water solution (50% by mass solid content). The viscosity of the resulting treatment solution was 950 mPa · s/m.

By using said treatment solution, a molded fiber sheet (thickness 10mm) was manufactured in the same manner as EXAMPLE 1. The ventilation resistance of the resulting molded fiber sheet was measured using the same tester as used in EXAMPLE 1 was 4.6kPa · s/m.

[COMPARISON 1]

In EXAMPLE 1, a molded fiber sheet having a thickness of 10mm was manufactured in the same manner as in EXAMPLE 1, excepting that a flame retardant containing phosphorous and nitrogen was used instead of expandable graphite. The ventilation resistance of the resulting molded fiber sheet was 3.3kPa · s/m. A stability test and a fire resistance test were carried out on said molded fiber sheets manufactured in EXAMPLE 1, 2 and 3, and COMPARISON 1. Test methods were as follows.

The fire resistance test
UL94: Using a test piece having a length of 125mm, and a thickness of 10mm using a method according to UL94 standard.
FMVSS-302 : Using a test piece having a length of 350mm, a width of 100mm, and a thickness of 10mm using a method according to the FMVSS-302 method.
Stability test of treatment solutions.
Each treatment solution was kept at a room temperature, and stability being optically determined. The evaluation indicator is as follows.

◎ : stable uniform solution after 7 days standing.
○: expandable graphite separates after 2 to 3 days standing.
× : expandable graphite sediments and separates 10 to 20 minutes after the preparation of said treatment solution.

Table 1

|  | Fire retardancy | | Stability test of treatment solutions |
| --- | --- | --- | --- |
|  | UL94 | FMVSS-302 |  |
| EXAMPLE 1 | V-0 | Nonflammability | × |
| EXAMPLE 2 | V-0 | Nonflammability | ○ |
| EXAMPLE 3 | V-0 | Nonflammability | ◎ |
| EXAMPLE 4 | Not passed | Nonflammability | ◎ |

[EXAMPLE 4]

A fiber sheet (unit weight: 450g/m$^2$, thickness : 15mm) was manufactured by the needle punching method, using a fiber web containing 50% by mass of hollow polyester fiber (hollow ratio : 20%, (fiber fineness : 7dtes, fiber length : 60mm), 20% by mass of vinylon fiber (fiber fineness : 12dte, fiber length : 45mm) and 30% by weight of hemp fiber (fiber fineness : 20dtex, fiber length : 40mm).

A treatment solution was prepared by mixing 50 parts by mass of phenol-alkylresorcin-folmaldehyde precocondensation polymer (50% by mass solid content), 17 parts by mass of carboxymethylcellulose (1% by mass water solution), 5 parts by mass of PRIMAL ASE-60 as a thickener, 27 parts by mass of expandable graphite (expansion start temperature : 300°C, expansion rate : 150 times), and 1 part by mass of ammonia water (27% by mass), the viscosity of said treatment solution being 2000mPa · s.

Said treatment solution was then impregnated into said fiber sheet in an amount of 40% by mass solid content, after which said fiber sheet into which said treatment solution was impregnated, was then dried in the drying chamber at 100°C for 3 minutes with decompression, to precure said fiber sheet. Said precured fiber sheet was then hot-pressed at 220°C for 60 seconds, to precure a molded fiber sheet having a thickness of 10mm. The fire resistance of the resulting molded sheet was V-0 according to UL94 standard. Further, said treatment solution had excellent workability without the sedimentation of the expandable graphite. The ventilation resistance of said molded fiber sheet was 7.5kPa · s/m.

[EXAMPLE 5]

A fiber sheet (unit weight: 400g/m$^2$, thickness 25mm) was manufactured by the needle punding method, using a fiber web containing 60% by mass of hollow polyester fiber (hollow rate :20%, fiber fineness: 25dtex, fiber length: 50mm), 10% by mass of kenaf fiber (fiber fineness 30dtex, fiber length: 45mm) and 30% by mass of low melting point polyester fiber (softening point: 120°C, fiber fineness: 7dtex, fiber length: 45mm).

Twenty parts by mass of sulfomethylated phenol-alkyl resorcin-formaldehyde precocondensation polymer (55% by mass solid content), 1 part by mass of carbon black dispersion (30% by mass solid content), 3 parts by weight of zirconium group water repellent agent (40% by mass solid content), 20 parts by mass of polyvinylalcohol (6% by mass solid content, saponification degree: 99mol%), 5 parts by mass of PRIMAL, TT-65 (Rohm and Haas Co., Trade Name) as a thickener, 3 parts by mass of expandable graphite (expansion start temperature: 220°C, expansion rate: 200 times), 0.5 parts by mass of ammonia water, and 47.5 parts by mass of water were mixed together to prepare a treatment solution. The viscosity of the resulting treatments solution was 840mPa · s.

Said treatment solution was then impregnated into said fiber sheet, in an amount of 40% by mass solid content, after which said fiber sheet into which said treatment solution was impregnated, was dried at 100 to 120°C for 3 minutes in the drying chamber, with decompression to obtain a precured fiber sheet.

A nonwoven fiber surface sheet was manufactured by impregnating a treatment solution into a nonwoven spunbonded polyester (unit weight 30g/m$^2$), said treatment solution containing 30 parts by mass of sulfomethylated phenol-alkyl resorcin- formaldehyde precocondensation polymer (55% by mass solid content), 1 part by mass of carbon black dispersion (30% by mass solid content) 2 parts by mass of a fluorine group water-oil repellant agent (20% by mass solid content), 3 parts by mass of a flame retardant containing phosphorus and nitrogen, and 64 parts by mass of water, then drying and precuring said nonwoven spunbonded polyester into which said treatment solution was impregnated in an amount of 30% by mass solid content, at 130 to 150°C for 2 minutes in the drying chamber with decompression.

The resulting precured nonwoven fiber surface sheet was then put on said fiber sheet, after which the resulting laminated fiber sheet was hot-pressed at 200°C for 60 seconds in a prescribed shape, to obtain a molded laminated fiber sheet, having excellent shape stability, high rigidity and excellent water-oil repellency. Further, when said laminated fiber sheet is molded or finished, fine fibers do not scatter, improving its to workability, while in a case of a traditional molded laminated sheet, fine glass fibers stick into the skin of the workers. Further, the fire resistance of said molded laminated fiber sheet was V-0 according to UL94 standard, and said molded laminated fiber sheet was useful as an engine hood silencer. The ventilation resistance of said molded laminated fiber sheet was 20.5kPa · s/m.

[EXAMPLE 6]

A fiber sheet (unit weight: 400g/m2, thickness: 30mm) was manufactured by heating a fiber web containing 80% by mass of hollow polyester fiber (hollow rate: 25%, fiber fineness: 6dtex, fiber length: 55mm), and 20% by mass of low melting point polyester fiber (softening point: 120, fiber fineness: 6dtex, fiber length: 4.5mm) at 180°C, to melt said low melting point polyester fiber, wherein the fibers in said fiber sheet were bound together with said low melting point polyester fiber.

A treatment solution was prepared by mixing 30parts by mass of sulfimethylated phenol- alkylresorcin-formaldehyde precocondensation polymer (50% by mass solid content), 0.5 parts by mass of a carbon black dispersion (30% by mass solid content), 2 parts by mass of a fluorine group water-oil repellent agent (20% by weight solid content), 5 parts by mass of acrylic resin emulsion (50% by mass solid content), 3 parts by mass of PRIMAL ASE-60 used in EXAMPLE 3, 5 parts by mass of thermally expandable particles (capsule type Matsumoto Microsphere F-100: Matsumoto Yushi Seiyaku Co., Ltd. Trade Name, softening point of shell 135 to 145°C), 3 parts by mass of expandable graphite (expansion start temperature: 200°C, expansion ratio: 150 times), 0.1 parts by mass of colloidal silica, 0.5 parts by mass of ammonia water (27% by mass) and 50.9 parts by mass of water. The viscosity of said treatment solution was 850mPa · s. Said treatment solution was then impregnated into said fiber sheet in an amount of 40% by mass solid content, and said fiber sheet into which said treatment solution was impregnated, was then dried at 100 to 110°C for 3 minutes in the drying chamber with decompression, to precure a fiber sheet. The resulting precured fiber sheet was then hot-pressed at 180°C for 60 seconds into a prescribed shape, to expand said thermally expandable particles under the thickness restrictions, to obtain a molded fiber sheet. The resulting molded sheet had excellent sound absorbing property, high rigidity, and excellent water-oil repellency. The fire resistance of said molded fiber sheet was V-0 according to the UL94 standard, and said molded fiber sheet was useful as a dash silencer and outer dash silencer for an automobile. The ventilation resistance of said molded fiber sheet was 30.3kPa · s/m.

[EXAMPLE 7]

Sixty parts by mass of phenol-alkylresorcin-formaldehyde precocondensation polymer (55% by mass solid content), 2 parts by mass of a fluorine group water-oil repellant agent (15% by mass solid content), 1 part by mass of a carbon black dispersion (30% by mass solid content), 0.5 parts by mass of expandable graphite (expansion start temperature: 200°C, expansion rate: 150 times), 10 parts by mass of methylcellulose (4% by mass water solution), and 26.5 parts by mass of water were mixed together to prepare a treatment solution. Said treatment solution was then impregnated into a needle punched nonwoven polyester fabric sheet (unit weight 80g/m$^2$); in an amount of 25% by mass solid content. Polyamide powder (200mesh pass) as a hot-melt adhesive, having a melting point of 120°C, was scattered on to the backside of said nonwoven polyester fabric sheet, into which said treatment solution was impregnated, in an amount of 5g/m$^2$, after which said nonwoven polyester fabric sheet was dried at 130 to 140°C for 2 minutes in the drying chamber, with said polyamide powder (hot-melt adhesive) being softened to stick to said nonwoven polyester fabric sheet, to produce a surface sheet.

Said surface sheet was put on said precured fiber sheet, manufactured in EXAMPLE 6, and the resulting laminated sheet was then hot-pressed into a prescribed shape at 180 for 60 seconds under thickness restrictions to expand said thermally expandable particles, and produce a molded laminated sheet. The resulting molded laminated sheet had an excellent sound absorbing property, high rigidity and excellent water-repellency, with a flame resistance of V-0 according to UL94 standard, so that said molded laminated sheet was useful as a head lining for an automobile. The ventilation resistance of said molded laminated sheet was 31.0kPa · s/m.

[EXAMPLE 8]

A fiber sheet (unit weight : 350g/m2, thickness : 20mm)was manufactured by the needle punching method using a fiber web containing 60% by mass of polyester fiber (fiber fineness : 1.5dtx, fiber length : 45mm), 10% by mass of low melting point polyester (softening point : 110°C, fiber fineness : 3dtex, fiber length : 54mm) and 30% by mass of hollow polyester fiber (hollow ratio : 25%, fiber fineness : 3dtex, fiber length : 50mm).

A treatment solution was prepared by mixing 40 parts by mass of sulfomethylated phenol-alkylresorcin-formaldehyde precocondensation polymer (50% by mass solid content), 0.5 parts by mass of a carbon black dispersion (30% by mass solid content), 3 parts by mass of a fluorine group water-oil repellent agent(15% by mass solid content), 20 parts by mass of polyvinylalcohol (8% by mass solid content, saponification degree : 99.5 mol%), 2 parts by mass of PRIMAL, ASE-60 (Rohm and Hass Co., Trade Name) as a thicknener, 1 part by mass of PRIMAL, TT-615 (Rohm and Haas Co., Trade Name) as a thickener, 0.2 parts by mass of expandable graphite A (expansion start temperature : 130 to 150°C, expansion ratio : 150 times), 7 parts by mass of expandable graphite B (expansion start temperature : 300 to 320°C, expansion ratio : 150 times), 0.5 parts by mass of ammonia water (27% by mass) 0.1 parts by mass of 2.6-di-tertiarybutyl-p-cresol group antioxidant, and 25.7 parts by mass of water. The viscosity of the resulting treatment solution was 1200 mPa · s.

Said treatment solution was impregnated into said fiber sheet in an amount of 40% by mass solid content and said fiber sheet, into which said treatment solution was impregnated, was dried at 100 to 110°C for 3 minutes in the drying chamber with decompression, to produce a precured fiber sheet.

On the other hand, a surface sheet was manufactured by impregnating a treatment solution into a nonwoven fabric sheet of meta type aramid fiber (unit weight : 40g/m$^2$, fiber fineness : 5dtex), in an amount of 20% by mass solid content, said treatment solution containing 40 parts by mass of sulfomethylated phenol-alkyl resorcin-formaldehyde precocondensation polymer (55% by mass of solid content), 1 part by mass of a carbon black dispersion (30% by mass solid), and 2 parts by mass of a fluorine type water-oil repellent agent (15% by mass), and then precuring said nonwoven fabric sheet into which said treatment solution was impregnated at 140 to 150°C, for 2 minutes in the drying chamber.

The resulting surface sheet was laminated on to said fiber sheet, then the resulting laminated sheet was hot-pressed into a prescribed shape at 210°C, for 60 seconds restricting the thickness of said laminated sheet, and expanding said expandable graphite A to produce a molded product. Said molded laminated sheet has excellent sound absorption property, and high rigidity, as well as excellent heat resistance and water-oil repellency, the flame resistance of said molded laminated sheet being V-0 according to UL94 standard, and is useful as a hood silencer, and engine under cover silencer of an automobile. The ventilation resistance of said molded laminated sheet was 10.2kPa · s/m.

[EXAMPLE 9]

Said treatment solution prepared in EXAMPLE 4 was impregnated into a felt, wherein recycled fibers were bound with a synthetic resin (unit weight : 800g/m$^2$, thickness : 25mm) in an amount of 10% by mass solid content, and then said felt into which said treatment solution was impregnated, was dried at 100 to 130°C, for 2 minutes in the drying chamber to remove the water, and then molded at 200 to 230°C for 3 minutes to produce a molded fiber sheet. Said molded fiber sheet has excellent flame resistance and is useful as the floor mat and the like for an automobile. The ventilation resistance of said molded fiber sheet was 6.6kPa · s/m.

[EXAMPLE 10]

A fiber web containing 70% by mass of kenaf fiber (fiber fineness : 30dtex, fiber length : 40mm) and 30% by mass of polypropylene fiber (softening point : 140°C, fiber fineness: 1.5dtex, fiber length: 40mm) was heated at 180°C to melt said polypropylene fiber in said fiber web and bind said fibers each other with said melted polypropylene fiber, to produce a fiber sheet (unit weight: 500g/m$^2$, thickness: 15mm).
A treatment solution was prepared by mixing 85 parts by weight of an acrylic emulsion (50% by mass solid content), 5 parts by mass of expandable graphite (expansion start temperature: 300°C, expansion ratio: 150 times) and 10 parts by mass of a polyvinyl alcohol water solution (10% by mass solid content, saponification degree : 85 mol%). Said treatment solution was impregnated into said fiber sheet in an amount of 30% by mass solid content, and then said fiber sheet into which said treatment solution was impregnated, was dried at 100 to 130°C in the drying chamber to prepare a moldable fiber sheet. Said moldable fiber sheet was left standing in the drying chamber, at a temperature of 150 to 180°C for 5 minutes, to melt said polypropylene fiber in said fiber sheet, then cold-pressed to obtain a molded fiber sheet whose-thickness was 5mm. Said molded fiber sheet has high rigidity and excellent flame resistance, and is useful as the doorboard for an automobile. The ventilation resistance of said molded fiber board was 90.5kPa · s/m.

[EXAMPLE 11]

A fiber sheet (unit weight : 80g/m$^2$, thickness : 2mm) was manufactured by the needle punching a fiber web containing 95% by mass of polyester fiber (fiver fineness : 1.5dtex, fiber length : 36mm) and 5% by mass of a low melting point polyester fiber (softening point: 110°C, fiver fineness: 4dtex, fiber length : 40mm).
A treatment solution was then prepared by mixing 65 parts by mass of a phenol-alkylresorcin-formaldehyde precocondensation polymer (50% by mass solid content), 10 parts by mass of a water soluble epoxy resin (60% by mass solid content), 3 parts by mass of a an expandable graphite (expansion start temperature : 300°C, expansion ratio: 150 times), and 22 parts by mass of a polyvinyl alcohol water solution (5% by mass solid content, saponification degree: 99.5mol%). The resulting treatment solution was then coated on to said fiber sheet by spraying in an amount of 40% by mass solid content, and then said fiber sheet on to which said treatment solution was coated, was dried at 150 to 180°C for 2 minutes in the drying chamber, to obtain a fiber sheet containing synthetic resin. Said fiber sheet containing synthetic resin was used as reinforcement for the base of a molded head lining for an automobile, said base consisting of a hard-type formed polyurethane, and a surface sheet. Said fiber sheet containing synthetic resin has high rigidity and excellent flame resistance.

[EXAMPLE 12]

Thirty parts by mass of an acrylic emulsion (50% by mass of solid content), 15% by mass of a polyvinylalcohol (10% by mass solid content, saponification degree : 98.5mol%), 10 parts by mass of PRIMAL ASE-60 (Rohm and Haas Co., Trade Name), 20 parts by mass of expandable graphite (expansion start temperature : 300 to 320°C, expansion ratio : 130 times, particle size : 80mesh), 1 part by mass of ammonia water, and 24 parts by mass of water were mixed and stirred by effecting an ultrasonic wave (frequency : 30kH$_2$) for 5 minutes, to minimize and disperse said expandable graphite, and prepare a treatment solution. The viscosity of the resulting treatment solution was 840mPa · s. Said treatment solution was then impregnated into said fiber sheet manufactured in EXAMPLE 1 (unit weight-50g/m$^2$, thickness 15mm) with said expandable graphite adhering deeply to the inside of said fiber sheet. It seems that said expandable graphite was minimized by the effecting ultrasonic wave effect, which improved dispersability, so that said minimized expandable graphite could adhere deeply to the inside of said fiber sheet.

[EXAMPLE 13]

A fiber web containing 40% by mass of a polyester fiber (fiber fineness: 5dtex, fiber length : 25mm), 20% by mass of low melting point polyester fiber (softening point: 110°C, fiber fineness: 2.5dtex, fiber length : 20mm) and 40% by mass of kenaf fiber (fiber fineness: 40dtes, fiber length : 30min) was used.

Said fiber web was heated to melt said low melting point polyester fiber and bind said fibers each other with said melted polyester fiber, and produce a fiber sheet (unit weight : 250g/m², thickness : 30mm).

A treatment solution containing 40 parts by mass of a sulfomethylated phenol-alkylresorcin-formaldehyde pre-cocondensation polymer (50% by mass solid content), 1 part by mass of a carbon black dispersion (30% by mass solid content), 2 parts by mass of a fluorine group water-oil repellent agent (20% by mass solid content) and 57 parts by mass of water was prepared. Said treatment solution was then impregnated into said fiber sheet in an amount of 40% by mass solid content, and said fiber sheet into which said treatment solution was impregnated, was then dried and precured at 140 to 150°C for 10 minutes in the drying chamber. Further, said expandable graphite dispersion prepared in EXAMPLE 12 was coated on to said precured fiber sheet by spraying in an amount of 40g/m² per side, then dried at 140 to 150°C for 5 minutes to manufacture an expandable graphite coated, precured fiber sheet. On the other hand, a polyethylene sheet having a thickness of 20$\mu$m was extruded and laminated on to the back side of a nonwoven spunbonded fabric (unit weight: 50 g/m²) made of a polyester fiber, to produce a nonwoven polyethylene sheet laminated fiber sheet. Two parts by mass of a phosphorus · nitrogen group fire retardant was added and mixed into 98parts by mass of said treatment solution, and said treatment solution containing said fire retardant was impregnated into said nonwoven fabric in an amount of 45% by mass solid content, and said nonwoven fabric in which said treatment solution was impregnated was dried at 140 to 150°C for 30 seconds in the drying chamber, to produce a surface sheet. Said surface sheet was then put on said precured fiber sheet, after which the resulting laminated fiber sheet was hot-pressed at 200°C for 45 seconds, to obtain a molded laminated sheet. The ventilation resistance of said molded laminated sheet was 58.3kPa · s/m, and flame resistance of said molded laminated sheet was V-0 according to UL94 standard, so that said molded laminated sheet has excellent sound absorbing property and is used as a dashsilencer and outerdash silencer for an automobile body.

POSSIBILITY OF INDUSTRIAL USE

Said fiber sheet of the present invention has a high flame resistance, and is harmless, so that said fiber sheet is useful for automobile or building interiors, and the like.

**Claims**

1.  A fire resistant fiber sheet wherein expandable graphite is contained in fibers.

2.  A fire resistant fiber sheet in accordance with Claim 1, wherein said fibers are hollow, or hollow fibers are contained in said fibers.

3.  A fire resistant fiber sheet in accordance with Claim 1 or 2, wherein fibers having a low melting point of below 180 °C are mixed into said fibers.

4.  A fire resistant fiber sheet in accordance with any of Claims 1 to 3, wherein said fibers are bound with a synthetic resin binder.

5.  A fire resistant fiber sheet in accordance with Claim 4, wherein said synthetic resin binder is water soluble, and water solution of said synthetic resin binder in which said expandable graphite is dispersed, is impregnated into said fiber sheet.

6.  A fire resistant fiber sheet in accordance with Claim 5, wherein a water soluble synthetic resin is dissolved in said water solution.

7.  A fire resistant fiber sheet in accordance with Claim 5 or Claim 6, wherein said synthetic resin binder is a phenol group resin, and said phenol group resin is sulfomethylated and/or sulfimethylated.

8.  A molded fiber sheet made by molding said fire resistant fiber sheet in accordance with any of Claims 1 to 7 into a prescribed shape.

9.  A molded fiber sheet in accordance with Claim 8, wherein the ventilation resistance of said molded fiber sheet is in the range of between 0.1 and 100kP · as/m.

10. A laminated sheet, wherein other fiber sheet(s) is/are laminated on one or both side(s) of said fire resistant fiber sheet in accordance with any of Claims 1 to 7, with an intermediating porous thermoplastic resin film.

11. A molded laminated sheet made by molding said laminated sheet in accordance with Claim 10, into a prescribed shape.

12. A molded laminated sheet in accordance with Claim 11, wherein the ventilation resistance of said molded laminated sheet is in the range of between 0.1 and 100kPa · s/m.

Fig. 1

## INTERNATIONAL SEARCH REPORT

| | International application No. |
|---|---|
| | PCT/JP2004/012339 |

| A. CLASSIFICATION OF SUBJECT MATTER |
|---|
| Int.Cl⁷  D06M11/74, D06M11/79, D06M15/41, B32B27/12 |
| According to International Patent Classification (IPC) or to both national classification and IPC |

| B. FIELDS SEARCHED |
|---|
| Minimum documentation searched (classification system followed by classification symbols) |
| Int.Cl⁷  D06M11/00-11/84, D06M15/00-15/72, B32B27/12 |

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| P,X | JP 2003-247164 A  (Seiren Co., Ltd.), 05 September, 2003 (05.09.03), Claim 1; Par. No. [0007] (Family: none) | 1 |
| X | JP 2002-302875 A  (Mitsubishi Chemical Corp.), 18 October, 2002 (18.10.02), Claim 1; Par. Nos. [0015], [0017] (Family: none) | 1-12 |
| X | JP 11-140755 A  (Sekisui Chemical Co., Ltd.), 25 May, 1999 (25.05.99), Claim 1; Par. No. [0012]; examples 1 to 8 (Family: none) | 1-12 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 22 November, 2004 (22.11.04) | 14 December, 2004 (14.12.04) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

International application No.

PCT/JP2004/012339

C (Continuation). DOCUMENTS CONSIDERED TO BE RELEVANT

| Category* | Citation of document, with indication, where appropriate, of the relevant passages | Relevant to claim No. |
|---|---|---|
| X | JP 9-31887 A (UCAR CARBON TECHNOLOGY CORP.), 04 February, 1997 (04.02.97), Claim 1; Par. No. [0007] & EP 735187 A1 | 1-12 |
| X | JP 4-222275 A (Idemitsu Kosan Co., Ltd.), 12 August, 1992 (12.08.92), Claims 1, 2; Par. No. [0014] (Family: none) | 1-12 |
| A | JP 63-282364 A (Petoca, Ltd.), 18 Novemer, 1988 (18.11.88), Full text (Family: none) | 1-12 |

Form PCT/ISA/210 (continuation of second sheet) (January 2004)